# EUROPEAN PATENT APPLICATION

(11) **EP 4 210 149 A1**
(43) Date of publication of application: **12.07.2023**
(21) Application number: 22209014.4
(22) Date of filing: 23.11.2022
(51) Int. Cl.: H01M 10/54, C01G 53/00, B09B 3/70

(54) **RECOVERY METHOD FOR POSITIVE ELECTRODE ACTIVE MATERIAL**

(30) Priority: 05.01.2022 JP 2022000552
(71) Applicant: Toyota Jidosha Kabushiki Kaisha, Aichi-Ken 471-8571 (JP)
(72) Inventor: YOKOYAMA, Tomohiro, Toyota-shi,, 471-8571 (JP)
(74) Representative: J A Kemp LLP

(57) **Abstract**

A recovery method for a positive electrode active material includes: separating and recovering, from a positive electrode plate of a battery in which a positive electrode mixture containing a positive electrode active material is laminated on a positive electrode foil, the positive electrode mixture; supplying at least one of ozone and hydrogen peroxide to a slurry containing the positive electrode mixture to oxidize the positive electrode mixture; and separating and recovering the positive electrode active material from the slurry.

## Description

### BACKGROUND OF THE INVENTION

### 1. Field of the Invention

The present disclosure relates to a method of recovering positive electrode active material particles from a battery.

### 2. Description of Related Art

Japanese Unexamined Patent Application Publication No. 2014-203567 (JP 2014-203567 A) discloses a method of transferring a positive electrode active material layer on a current collecting foil to an adhesive tape and then recovering positive electrode active material particles with a solvent.

WO 2012/072619 discloses a method of recovering lithium from a portion containing LiFePO₄. More specifically, the portion containing LiFePO₄ is treated with an acid solution in presence of an oxidizing agent, and dissolved lithium ions are separated and are precipitated as a salt from a lithium-containing solution. Here, it is described that post-treatment by a hydrometallurgical method is carried out with dilute sulfuric acid by introduction of oxygen or ozone or addition of hydrogen peroxide in a temperature range of 80°C to 120°C.

Japanese Unexamined Patent Application Publication No. 11-097076 (JP 11-097076 A) discloses a method of recovering valuable metals by immersing an electrode in an acid solution and separating a current collector and an active material.

### SUMMARY OF THE INVENTION

However, according to the related art, such as JP 2014-203567 A, a large amount of carbon components, such as a dispersion material and a binding material (binder), adhere to a surface of a recovered positive electrode active material, and a positive electrode active material having crystallinity equivalent to crystallinity of a new positive electrode active material cannot be recovered. More specifically, when a lithium-ion secondary battery is charged and discharged, a coating film of a phosphorus (P) or fluorine (F) compound derived from a salt or an additive in an electrolyte is formed on the positive electrode active material, and remains on the recovered positive electrode active material.

For removal of the binding material (binder), there are techniques that use a large amount of organic solvents or expose the binding material (binder) to a special high-pressure environment, but the techniques are unsuitable for industrial mass production (high cost), and it has been found that the techniques are methods that emit a large amount of CO₂ according to estimates of a life cycle assessment (LCA) in recent years.

Therefore, the present disclosure provides a recovery method for a positive electrode active material having high productivity, in which the positive electrode active material to be recovered has favorable quality.

An aspect of the present disclosure relates to a recovery method for a positive electrode active material. The recovery method includes: separating and recovering, from a positive electrode plate of a battery in which a positive electrode mixture containing a positive electrode active material is laminated on a positive electrode foil, the positive electrode mixture; supplying at least one of ozone and hydrogen peroxide to a slurry containing the positive electrode mixture to oxidize the positive electrode mixture; and separating and recovering the positive electrode active material from the slurry.

In the aspect of the present disclosure, when the positive electrode mixture is oxidized, pH of the slurry may be controlled to be higher than nine.

In the aspect of the present disclosure, the ozone may be supplied by bubbling.

According to the aspect of the present disclosure, it is possible to provide a recovery method for a positive electrode active material, which has high productivity, and in which the positive electrode active material to be recovered has favorable quality.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a flow of a recovery method for a positive electrode active material; and
FIG. 2 is a graph illustrating a difference in a positive electrode active material obtained depending on presence or absence of an oxidative decomposition step.

### DETAILED DESCRIPTION OF EMBODIMENTS

### 1. Battery

An object of a recovery method for a positive electrode active material of the present disclosure is a battery (secondary battery), for example, a sealed non-aqueous electrolyte secondary battery or an all-solid-state battery mounted on a vehicle, such as a hybrid vehicle or a battery electric vehicle, and more specifically, a lithium-ion secondary battery. Although the form of the battery is not particularly limited and is as known in the art, here, a sealed non-aqueous electrolyte secondary battery is mentioned and has the following configuration, for example.

The battery is composed of a rectangular parallelepiped outer case, a flat wound electrode body housed in the outer case, a positive electrode terminal member and a negative electrode terminal member supported by the outer case, and the like. A non-aqueous electrolyte is held in the outer case.

The electrode body is formed by laminating a belt-like positive electrode plate and a belt-like negative electrode plate on each other with a pair of belt-like separators made of porous resin interposed therebetween, winding the laminate around an axis, and compressing the wound laminate into a flat shape.

The positive electrode plate has a belt-like positive electrode foil made of aluminum as a core material. A porous positive electrode active material layer is formed on a part of front and back surfaces of the positive electrode foil. The positive electrode active material layer is composed of a positive electrode mixture formed of positive electrode active material particles, conductive material particles, and a binding material. In the present embodiment, lithium/cobalt/nickel/manganese composite oxide particles can be used as the positive electrode active material particles, acetylene black (AB) particles can be used as the conductive material particles, and polyvinylidene fluoride (PVdF) can be used as the binding material.

The negative electrode plate has a belt-like negative electrode foil made of copper as a core material. A porous negative electrode active material layer is formed on front and back surfaces of the negative electrode foil. The negative electrode active material layer is composed of a negative electrode mixture formed of negative electrode active material particles, a binder, and a thickener. In the present embodiment, natural graphite particles can be used as the negative electrode active material particles, styrene-butadiene rubber (SBR) can be used as the binder, and carboxymethyl cellulose (CMC) can be used as the thickener.

### 2. Recovery Method for Positive Electrode Active Material

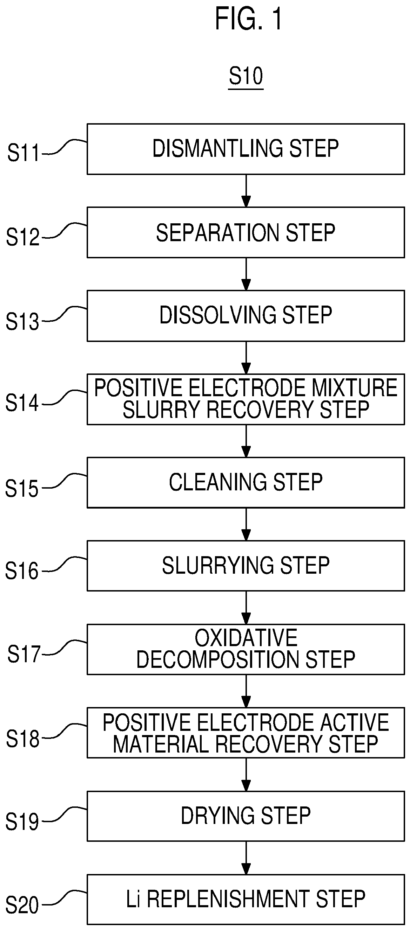

The recovery method for a positive electrode active material of the present disclosure is to recover a positive electrode active material from such a battery. FIG. 1 shows a flow of Recovery method S10 for a positive electrode active material according to one form. As can be seen from FIG. 1, Recovery method S10 for a positive electrode active material of the present embodiment includes Step S11 to Step S20. Hereinafter, each step will be described.

### 2.1. Dismantling Step S11 (Step S11)

Dismantling step S11 is a step of dismantling a discharged battery. Specifically, the battery is put into a crusher (shredder) to be microfabricated. A degree of miniaturization is not particularly limited, and an optimum particle size varies depending on a separation method performed in the next step, but it is easy to perform separation when microfabrication is enabled to a foil piece of 500 mm² or less, preferably about 100 mm². When the particle size is too large, a recovery rate decreases because the electrode active material is recovered as a composite, and when the particle size is too small, in a case of air flow separation, there is a probability that a quality of the recovered material decreases because a component with a large specific gravity that has been microfabricated is mixed.

### 2.2. Separation Step S12 (Step S12)

Separation step S12 is a step of removing heavy members (outer case, positive electrode terminal member, and negative electrode terminal member) and light members (separator and insulating film) from the battery microfabricated in Dismantling step S11, and separating and obtaining positive and negative electrode plates.

The separation method is not particularly limited, and examples thereof include air flow separation for dry type and specific gravity separation using liquid for wet type.

### 2.3. Dissolving Step S13 (Step S13)

Dissolving step S13 is a step of immersing the positive electrode plate and the negative electrode plate separated and obtained in Separation step S12 in an aqueous NaOH solution having a pH of 10 or higher. As a result, an aluminum foil (positive electrode foil) is dissolved and a positive electrode mixture is separated from the positive electrode plate to be slurried. Accordingly, according to Dissolving step S13, a mixture containing the microfabricated negative electrode plate and the slurried positive electrode mixture is obtained.

Although an aqueous NaOH solution is used here, LiOH can be used instead. Note that in a case where LiOH is used, there is a need to separately remove Al ions in waste liquid after Step S15 (Cleaning step S15) described below.

### 2.4. Positive Electrode Mixture Slurry Recovery Step S14 (Step S14)

In Positive electrode mixture slurry recovery step S14, a slurry containing the positive electrode mixture is separated and recovered from the mixture obtained in Dissolving step S13. Specifically, the negative electrode plate and other undissolved aggregates are separated and removed from the slurry by coarse filtration with a filter having an opening of 100 µm to 1000 µm or by specific gravity separation, to recover a positive electrode mixture slurry.

### 2.5. Cleaning Step S15 (Step S15)

Cleaning step S15 is a step of filtering the positive electrode mixture slurry obtained in Positive electrode mixture slurry recovery step S14 using filter paper having a pore size of 1 µm (No. 5C), and recovering a positive electrode mixture that is a solid content.

Thereafter, the obtained positive electrode mixture is washed with water to wash away Na ions and Al ions adhering to the positive electrode mixture. Note that it is preferable to prevent excessive washing with water because Li ions are also washed away from the positive electrode mixture in the washing with water. In this case, it is preferable to perform washing with water at a nonvolatile (NV) value of about 50% by mass. The term "NV value" indicates a mass ratio of components other than a dispersion medium.

### 2.6. Slurrying Step S16 (Step S16)

Slurrying step S16 is a step of reslurrying the positive electrode mixture (solid) obtained in Cleaning step S15. Specifically, the positive electrode mixture is added to water to which 0.1 mol or more of a base is added. Examples of the base include LiOH. In this case, a nonvolatile (NV) value of the slurry is preferably about 50% by mass. The term "NV value" indicates a mass ratio of components other than a dispersion medium.

### 2.7. Oxidative Decomposition Step S17 (Step S17)

Oxidative decomposition step S17 is a step of applying oxidizing means to the slurry obtained in Slurrying step S16. Specifically, at least one of oxidation by supplying ozone and oxidation by supplying hydrogen peroxide can be mentioned.

Ozone (O₃) is supplied from an ozone generator while the slurry is stirred. Meanwhile, hydrogen peroxide is supplied by being added to the slurry. Since hydrogen peroxide is generated by ozone and water in the supply of ozone, the supply of ozone and hydrogen peroxide are in parallel.

In the lithium-ion secondary battery that has passed through charging and discharging, as described above, a coating film of a phosphorus (P) or fluorine (F) compound derived from a salt or an additive in an electrolyte, and a carbon (C) compound, such as a binding material, is formed on the positive electrode active material, and remains thereon. Even in an oxidizing atmosphere of, for example, 900°C or higher (even after burning), the substance remains without volatilization. On the other hand, as in the present embodiment, when the slurried positive electrode mixture is set in an oxidizing environment under a wet condition (in water), coating film components are directly oxidized and deteriorated (oxidatively decomposed), and a part thereof is ionized, so that it can be dissolved in water and separated from the positive electrode active material.

In carrying out the above step, it is preferable to keep the pH in a range higher than nine from the viewpoint of avoiding the deterioration and dissolution of the positive electrode active material itself due to oxidation of the slurry as the oxidation of the components progresses. A more preferable pH is 10 or less. Although a specific method for pH control is not particularly limited, it can be performed by adjusting a supply amount of ozone and a supply amount of hydrogen peroxide.

In particular, when ozone is supplied, there is a concern that the pH of the slurry continues to fall because ozone and water react in an aqueous solution during ozone aeration to partially generate hydrogen peroxide, resulting in acidic liquid and deteriorating the positive electrode active material, so that the deterioration (dissolution) of the positive electrode active material can be suppressed by controlling the pH not to be nine or less. Therefore, it is preferable that ozone is continuously supplied from an ozone generator into the slurry by bubbling, and that the supply amount of ozone is adjusted for pH control.

Thus, the coating film component and the carbon component can be removed while the deterioration and dissolution of the positive electrode active material are suppressed.

### 2.8. Positive Electrode Active Material Recovery Step S18 (Step S18)

Positive electrode active material recovery step S18 is a step of separating and recovering, from the slurry, the positive electrode active material that has passed through Oxidative decomposition step S17. The separation is performed, for example, by filtration, and in that case, filter paper having a pore size of 1 µm (No. 5C) can be used.

A need for washing the positive electrode active material obtained in the above step with water can be eliminated.

### 2.9. Drying Step S19 (Step S19)

Drying step S19 is a step of removing moisture from the positive electrode active material obtained in Positive electrode active material recovery step S18 and drying the positive electrode active material. Drying means is not particularly limited, and examples thereof include air drying and vacuum drying.

### 2.10. Li Replenishment Step S20 (Step S20)

Li replenishment step S20 is a step of replenishing Li when the positive electrode active material obtained by recovering the positive electrode active material described above is insufficient in Li.

Therefore, in the above step, a composition of the positive electrode active material obtained in Drying step S19 is quantified by ICP analysis, and, in a case where Li is insufficient, Li is replenished. As means for replenishing Li, for example, lithium carbonate (Li₂CO₃) or lithium hydroxide (LiOH) is mixed with the obtained positive electrode active material, and the mixture is fired in an electric furnace at a predetermined temperature of 600°C to 1000°C for several hours. A composition of the positive electrode active material obtained after firing is confirmed again by ICP analysis and a crystal structure of the positive electrode active material is confirmed by XRD, to obtain a reusable positive electrode active material.

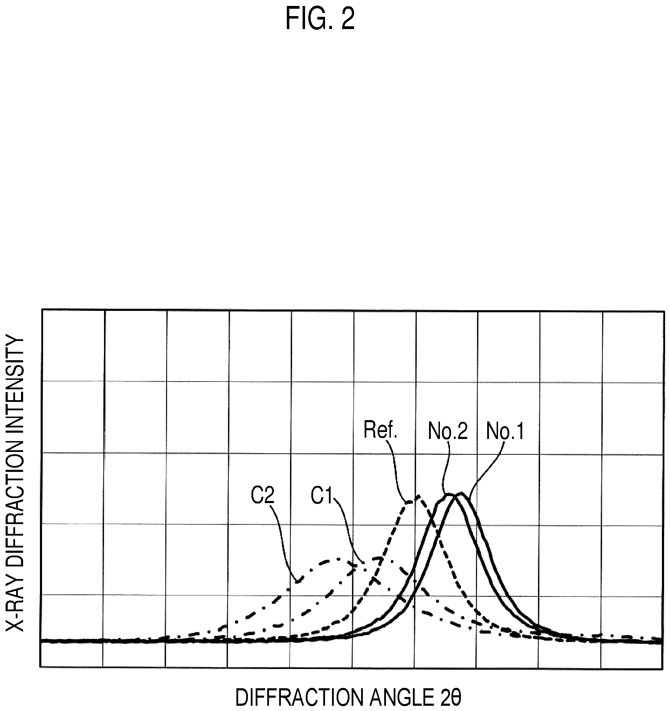

FIG. 2 shows measurement results (104 plane) of the XRD of the positive electrode active material after replenishing Li by the present step. No. 1 and No. 2 indicated by a solid line are examples according to Recovery method S10 of the present disclosure (ozone supply in Oxidative decomposition step S17). For comparison, a new positive electrode active material is represented by a broken line as "Ref', and "C1" and "C2" are indicated by a dot-and-dash line as an example in which Oxidative decomposition step S17 was not performed. The horizontal axis represents diffraction angle 2 θ, and the vertical axis represents X-ray diffraction intensity.

As can be seen from FIG. 2, the positive electrode active material (No. 1 and No. 2) recovered by the recovery method of the present disclosure has restored crystallinity to the same level as the new positive electrode active material (Ref.) (X-ray diffraction intensity is the same level). On the other hand, in the example in which Oxidative decomposition step S17 was not performed, crystallinity could not be restored.

### 3. Effect

According to the present disclosure, the positive electrode active material to be recycled can be obtained with favorable quality (crystal structure is the same as that of a new product) enough to be used as it is in a battery.

In addition, since a process for that purpose does not need a reaction layer in a special environment, such as an autoclave, equipment is simple, a cost can be reduced, and productivity is high.

Furthermore, in the present disclosure, since there is no need to use a solvent that needs time and effort for safety management and disposal management like a solvent, and there is no need to remove the material coated with the positive electrode active material by burning, generation of CO₂ can be greatly reduced, which is advantageous from the viewpoint of environment.

In addition, when considering recycling of the positive electrode active material, there are (1) recycling to obtain base metal, (2) recycling to obtain a compound as a raw material of the positive electrode active material, such as metal sulfate, and (3) recycling to directly obtain the positive electrode active material, from the recovered battery. In (1) and (2), since further processing of the material obtained by recycling is needed to produce the positive electrode active material, further CO₂ is generated in the process. On the other hand, in the present disclosure, since the positive electrode active material can be directly obtained as in (3), emission of CO₂ can be suppressed from such a viewpoint.

## Claims

1. A recovery method for a positive electrode active material, the recovery method comprising:
separating and recovering, from a positive electrode plate of a battery in which a positive electrode mixture containing a positive electrode active material is laminated on a positive electrode foil, the positive electrode mixture;
supplying at least one of ozone and hydrogen peroxide to a slurry containing the positive electrode mixture to oxidize the positive electrode mixture; and
separating and recovering the positive electrode active material from the slurry.

2. The recovery method according to claim 1, wherein, when the positive electrode mixture is oxidized, pH of the slurry is controlled to be higher than nine.

3. The recovery method according to claim 1 or 2, wherein the ozone is supplied by bubbling.
